# EUROPEAN PATENT APPLICATION

(11) **EP 3 309 264 A1**
(43) Date of publication of application: **18.04.2018**
(21) Application number: 17185404.5
(22) Date of filing: 08.08.2017
(51) Int. Cl.: C21D 9/00, B23P 15/00, B23K 20/12, C21D 9/34, C21D 9/50

(54) **HYBRID COMPONENT AND METHOD OF MAKING**

(30) Priority: 13.10.2016 US 201615292753
(71) Applicant: United Technologies Corporation, Farmington, CT 06032 (US)
(72) Inventor: BOCHIECHIO, Mario P., Vernon, CT Connecticut 06066 (US); LIN, Wangen, S.Glastonbury, CT Connecticut 06073 (US); STOLZ, D. Slade, Newington, CT Connecticut 06111 (US); RAGHAVAN, Ashwin, South Grafton MA01560 (US)
(74) Representative: Gittins, Alex Michael

(57) **Abstract**

A method of forming a hybrid component having an axis of rotation includes forming a first substrate having a first interface surface and a first average grain size, forming a second substrate having a second interface surface and a second average grain size different from the first average grain size, and inertia welding the first and second substrates at a junction of the first and second interface surfaces to form a solid-state joint between the first and second substrates.

## Description

### BACKGROUND

Traditionally, components of advanced engines are fabricated from a single material with uniform composition and microstructure. During operation, however, regions radially closer to a rotational component's axis of rotation generally operate at lower temperatures and higher stresses than the radially outer regions. A component fabricated from a single material does not possess optimized material properties for both the radially inner and outer regions to deal with the different radial stresses and temperatures in the part. As a result, the rotational component's performance can be severely limited. Presently, fabrication methods, such as solid-state joining or dual property heat treatments, can be used to produce a rotational component with improved location-specific properties. In the case of a rotational component having different materials (*e.g.,* blades of one material and a rotor disk of another material), however, fabrication is very complex due to the additional processing steps required and typically results in a region of weakness near the joint and/or transition zone between the two different materials.

To maximize performance, different regions of a rotational component should include different materials with location-optimized properties. For instance, regions radially closer to the axis of rotation of the rotational component benefit from greater low-temperature tensile strength, burst capability, and resistance to low-cycle fatigue, while regions at a greater radial distance from the component's centerline benefit from having greater high-temperature creep and rupture strength as well as increased defect tolerance.

### SUMMARY

A method of forming a hybrid component having an axis of rotation includes forming a first substrate having a first interface surface and a first average grain size, forming a second substrate having a second interface surface and a second average grain size different from the first average grain size, and inertia welding the first and second substrates together at a junction of the first and second interface surfaces to form a solid-state joint between the first and second substrates.

A method of forming a hybrid disk having an axis of rotation includes forming a bore substrate having a first interface surface and a first average grain size, and forming a rim substrate having a second interface surface and a second average grain size different from the first average grain size, and inertia welding the bore substrate and the rim substrate together at a junction of the first and second interface surfaces to form a solid-state joint between the bore substrate and the rim substrate.

A hybrid disk includes a bore portion having an average grain size between ASTM 11 and ASTM 9, a rim portion having an average grain size between ASTM 8 and ASTM 6, and a web portion located between the bore portion and the rim portion. The web portion includes a solid-state joint formed adjacent to a radially outer surface of the bore portion and a radially inner surface of the rim portion. The solid-state joint is angled between 5 degrees and 85 degrees relative to an axis of rotation of the hybrid disk.

### BRIEF DESCRIPTION OF THE DRAWINGS

Fig. 1 is a view of a hybrid rotor disk.
Fig. 1A is a radial cross-section view of the hybrid rotor disk of Fig. 1.
Fig. 2 is a view of an unjoined bore substrate and a rim substrate used to form a hybrid rotor disk.
Fig. 3 is a view of the substrates following bonding.
Fig. 4 is a schematic diagram of a method of producing a hybrid rotor disk.

### DETAILED DESCRIPTION

The present disclosure relates generally to fabrication processes for the manufacture of components having regions of differing microstructures and/or composition. Frequently, operating conditions demand components containing different regions, of which differing material properties are needed to optimize performance (*e.g*., reduce fuel burn, increase overall engine efficiency). Examples where operating conditions may demand this invention are components of advanced engines. Typically, advanced engines operate more efficiently at higher temperatures and pressures.

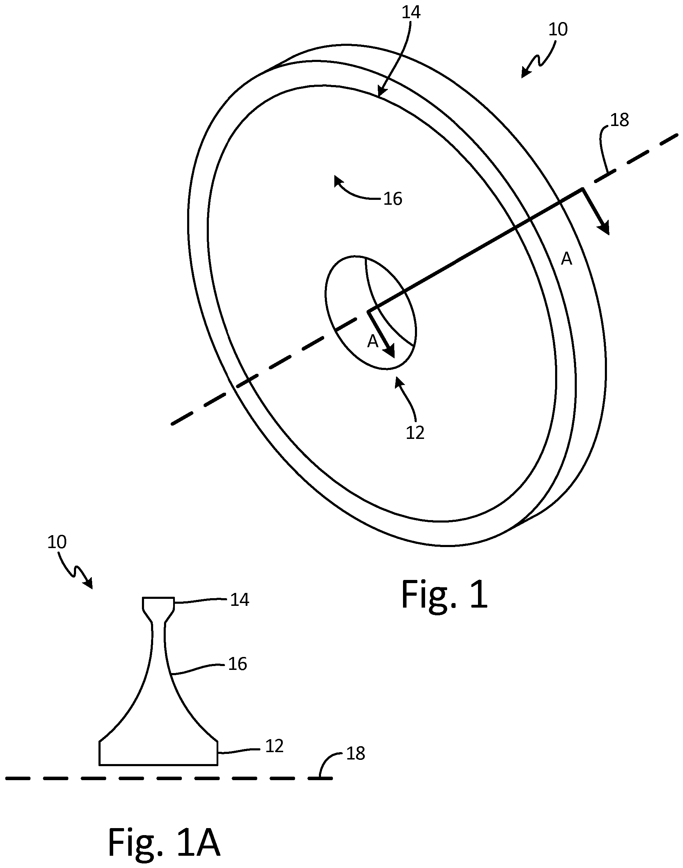

A hybrid component and a method of making the hybrid component are disclosed herein. One example of a hybrid component is a rotor disk for a compressor or turbine section of a gas turbine engine. Figs. 1 and 1A illustrate views of a hybrid disk. Fig. 1 shows a perspective view of hybrid disk 10 and Fig. 1A shows a radial cross-section of hybrid disk 10. Hybrid disk 10 includes bore region 12, rim region 14 and web region 16. During operation, hybrid disk 10 rotates about axis of rotation (centerline axis) 18. Bore region 12 is located radially inward of rim region 14 and web region 16 and rim region 14 is located radially outward of bore region 12 and web region 16. Bore region 12 is generally the central hub of hybrid disk 10 and can contain a through-hole for mounting hybrid disk 10 to a shaft. Web region 16 connects bore region 12 and rim region 14 so as to form a monolithic or one-piece hybrid rotor disk. The radially outer surface of hybrid disk 10 is located at rim region 14. Blade airfoils (not shown) are connected to hybrid disk 10 at the outer surface of rim region 14. As shown in Fig. 1A, hybrid disk 10 can have its greatest axial thickness (viewed left-to-right) at bore region 12. The region of least axial thickness can be at rim region 14 or a portion of web region 16 near rim region 14.

As described herein, hybrid disk 10 is formed from two substrates having differing material compositions and/or grain structures. In some cases, the two substrates are forged or cast alloys. The two substrates are joined together to form hybrid disk 10 by inertia welding. The inertia welding process produces a solid-state joint between the two substrates via a metallurgical bond formed by a process where frictional heat is generated between a rotating substrate and a stationary substrate under an applied load. This bonding process minimizes solidification discontinuities and is essentially "self-cleaning" by removing any surface contaminants as the frayed metal flows out of the joint at the weld interface. The joint is located in a lower stress region of hybrid disk 10, for example, in web region 16. By joining two substrates having differing material compositions and/or grain structures, hybrid disk 10 can be designed such that bore region 12 and rim region 14 are each optimized for expected operating conditions and so the joint is placed in a lower stress region of hybrid disk 10.

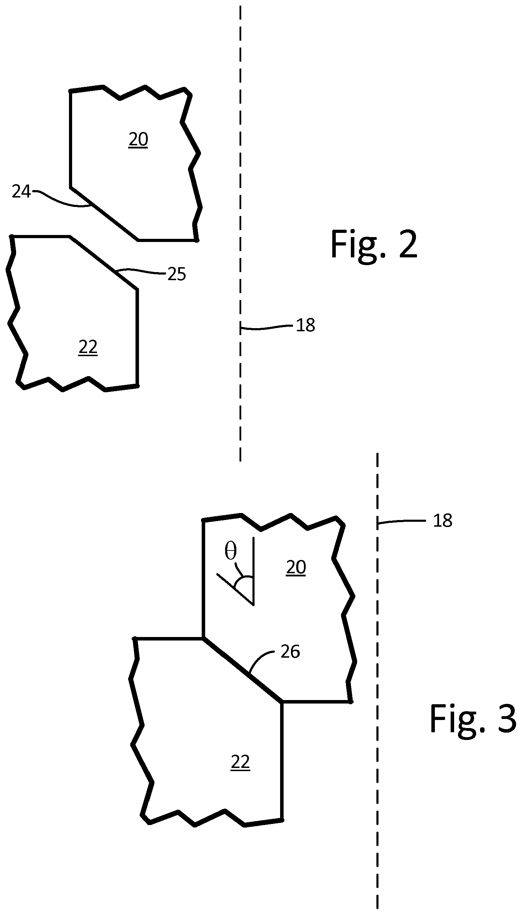

Fig. 2 illustrates unjoined bore substrate 20 and rim substrate 22. As will be described in greater detail, bore substrate 20 forms bore region 12 and part of web region 16 of hybrid disk 10 and rim substrate 22 forms rim region 14 and part of web region 16. Bore substrate 20 is shaped (by forging, casting and/or machining) to approximate the finished shape of bore region 12 of hybrid disk 10. Bore substrate 20 is machined to have interface surface 24 where the metallurgical bond will be formed. Bore substrate 20 contains materials generally optimized for bore region 12 of hybrid disk 10. In some embodiments, bore substrate 20 contains cast, wrought and/or powder metallurgy alloys having high degrees of tensile strength, low-temperature strength (resistance to low cycle fatigue) and burst capability. Examples of types of suitable alloys for bore substrate 20 include PRM48, ME16, IN100, IN1718, U720, U720li, ME3, Alloy 10 and low solvus, high refractory (LSHR) powder metallurgy alloys. In some examples, bore substrate 20 can include less than 0.06% carbon. Bore substrate 20 typically has a finer grain structure than rim substrate 22. In some embodiments, bore substrate 20 has an average grain size of ASTM E112-13 ("ASTM") size 9 to 11. Bore substrate 20 can be heat treated before being used to form hybrid disk 10. For example, in one embodiment, bore substrate 20 undergoes subsolvus heat treatment prior to inertia welding. Such heat treatment provides bore substrate 20 with properties generally desirable for bore region 12 of hybrid disk 10. This pre-welding heat treatment can be performed before or after shaping of bore substrate 20.

Rim substrate 22 is shaped (by forging, casting and/or machining) to approximate the finished shape of rim region 14 of hybrid disk 10. Rim substrate 22 is machined to have interface surface 25 where the metallurgical bond will be formed. Rim substrate 22 contains materials generally optimized for rim region 16 of hybrid disk 10. In some embodiments, rim substrate 22 contains cast, wrought and/or powder metallurgy alloys having high degrees of resistance to creep, rupture and cracking. Examples of suitable alloys for rim substrate 22 include PRM48, ME16, IN100, Alloy 10 and LSHR powder metallurgy alloys. In some examples, rim substrate 22 can include less than 0.06% carbon. Rim substrate 22 can contain a gamma-prime alloy having a higher solvus temperature than the alloy of bore substrate 20. Rim substrate 22 typically has a coarser grain structure than bore substrate 20. In some embodiments, rim substrate 22 has an average grain size of ASTM size 6 to 8. Rim substrate 22 can be heat treated before being used to form hybrid disk 10. For example, in one embodiment, rim substrate 22 undergoes supersolvus heat treatment prior to inertia welding so that grain growth occurs in rim substrate 22. Such heat treatment provides rim substrate 22 with properties generally desirable for rim region 14 of hybrid disk 10. This pre-welding heat treatment can be performed before or after shaping of rim substrate 22.

Fig. 3 illustrates the metallurgical bond between bore substrate 20 and rim substrate 22 following inertia welding. During inertia welding, either the bore substrate 20 or the rim substrate 22 is held stationary while the other substrate is rotated about rotational axis 18. During inertia welding, both bore substrate 20 and rim substrate 22 are oriented perpendicular to the rotational axis 18. While rotation is occurring, bore substrate 20 and rim substrate 22 are brought into contact with each other at respective interface surfaces 24 and 25. While rotation continues, interface surfaces 24 and 25 generate frictional heat that increases as pressure is applied in the direction of rotational axis 18. The necessary axial force, rotational speed and energy to form a metallurgical bond via inertia welding is dependent upon the surface areas of interface surfaces 24 and 25, as well as the material properties of bore substrate 20 and rim substrate 22, including the substrates' respective size, mass, and material composition. After a sufficient duration of time has elapsed to form a metallurgical bond during which rotation is occurring and the substrates are forced into contact, the rotation speed is reduced to zero and solid-state joint 26 is formed. During inertia welding, metal from the frayed interface surfaces 24 and 25 flows out of the solid-state joint 26, thereby removing any surface contaminants.
Once solid-state joint 26 has been formed, the bonded bore substrate 20 and rim substrate 22 can be machined to remove remnants from the bond interface. Following machining, the part is inspected and then undergoes heat treatment cycles for stress relief and aging of the microstructures of bore substrate 20 and rim substrate 22. These heat treatment steps relieve residual stress in the part and improve material properties of bore substrate 20 and rim substrate 22. The post welding heat treatments do not affect the grain size of either bore substrate 20 or rim substrate 22. After the stabilization and aging heat treatments, the part is finish machined into the desired shape to produce hybrid disk 10 and non-destructively evaluated. Alternatively, bore substrate and/or rim substrate 22 can undergo aging heat treatment prior to bonding. In this case, the post-welding heat treatment provides stress relief.

As shown in Figs. 2 and 3, interface surfaces 24 and 25 of bore substrate 20 and rim substrate 22, respectively, where solid-state joint 26 is formed are angled relative to axis of rotation 18 (shown in Fig. 3 by angle *θ*). As shown, angle *θ* is about 45°. By forming solid-state joint 26 at a non-zero and a non-90° angle relative to axis of rotation 18, the bond length (and resulting bond strength) of joint 26 is increased. In some embodiments, the bonding surfaces of bore substrate 20 and rim substrate 22 are angled between 5° and 85° relative to axis of rotation 18. In further embodiments, the bonding surfaces of bore substrate 20 and rim substrate 22 are angled between 15° and 75° relative to axis of rotation 18. In still further embodiments, the bonding surfaces of bore substrate 20 and rim substrate 22 are angled between 30° and 60° relative to axis of rotation 18. Thermal and stress analyses of hybrid disk 10 can be performed to determine optimal angles of the bonding surfaces (interface surfaces 24 and 25, respectively) of bore substrate 20 and rim substrate 22.

Solid-state joint 26 can be formed at a relatively low stress region of hybrid disk 10. A joint is often a "weaker" point within a component, and locating the joint in a region that is not subjected to excessive stress helps ensure that the joint holds during operation. Optimal locations for joint 26 within hybrid disk 10 will depend on the operating conditions of hybrid disk 10, as well as the compositions of bore region 12 and rim region 14. As with the bonding angle, thermal and stress analyses of hybrid disk 10 can be performed to determine optimal locations for joint 26. In some embodiments of hybrid disk 10, web region 16 is a region subjected to lower stress than portions of rim region 14, and joint 26 is located within web region 16. In some cases, joint 26 can be radially located between 50 percent and 80 percent of the radius of hybrid disk 10 (the distance from axis of rotation 18 to the radially outer surface of rim region 14).

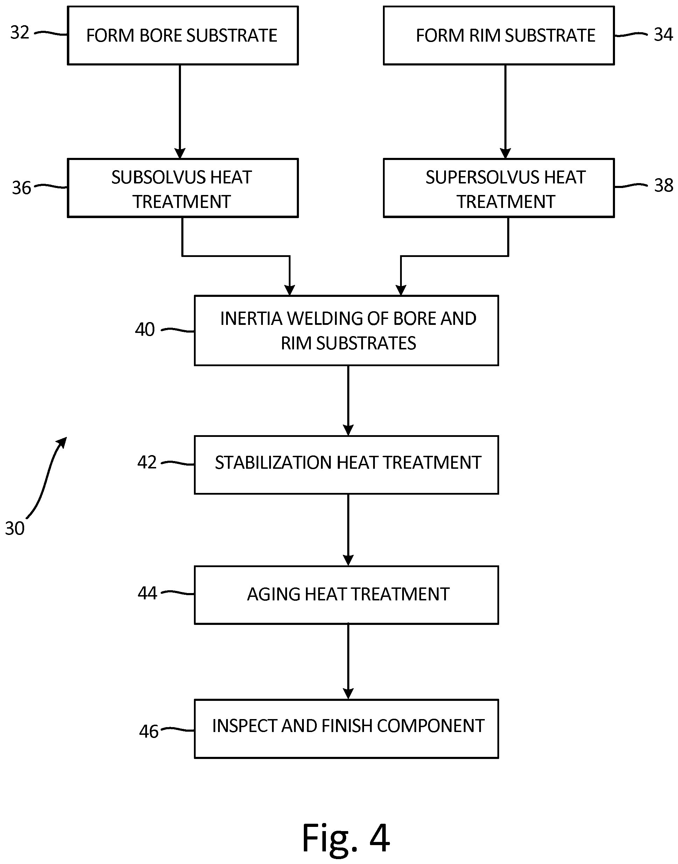

Fig. 4 schematically illustrates one embodiment of method 30 for preparing hybrid disk 10. In steps 32 and 34 of method 30, bore substrate 20 and rim substrate 22 are formed, respectively. In this embodiment, steps 32 and 34 are followed by subsolvus heating treatment step 36 on bore substrate 20 and supersolvus heating treatment step 38 on rim substrate 22. In step 40, bore substrate 20 and rim substrate 22 undergo inertia welding as described herein, resulting in the formation of solid-state joint 26 between bore substrate 20 and rim substrate 22. In step 42, the welded bore substrate 20 and rim substrate 22 undergoes a stabilization heat treatment to relieve residual stress. In step 44, the welded bore substrate 20 and rim substrate 22 undergoes an aging heat treatment to improve the component's material properties. Finally, in step 46, the joined part is inspected and is then finish machined to form hybrid disk 10. Variations on the method illustrated in Fig. 4 are described above.

The steps described herein produce a hybrid disk having specific features. Hybrid disk 10 prepared according to the method illustrated in Fig. 4 can include bore portion 12 having an average grain size between ASTM 11 and ASTM 9, rim portion 14 having an average grain size between ASTM 8 and ASTM 6, and web portion 16 located between bore portion 12 and rim portion 14. Web portion 16 includes solid-state joint 26 formed at interface surfaces 24 and 25 of bore substrate 20 and rim substrate 22, respectively. Solid-state joint 26 is angled between 5 degrees and 85 degrees relative to axis of rotation 18 of hybrid disk 10.

As described herein, hybrid disk 10 includes at least two different materials. One material is optimal for bore region 12 of hybrid disk 10; the other material is optimal for rim region 14 of hybrid disk 10. This allows hybrid disk 10 to have optimal materials at both bore region 12 and rim region 14.

Inertia welding is used to join the two substrates at a point within the web region 16 of the hybrid disk 10. This bonding process minimizes solidification discontinuities and is essentially "self-cleaning" by removing any surface contaminants as the frayed metal flows out of joint 26 during welding. Solid-state joint 26 is located in a relatively low stress area of the web region 16. Prior to the formation of a metallurgical bond, each of the two substrates can be heat treated to produce the desired properties and grain structures (e.g., finer grain structure at bore region 12, coarser grain structure at rim region 14). This eliminates the need for post-bonding heat treatments that change the grain size of the different regions of hybrid disk 10.

### Discussion of Possible Embodiments

The following are non-exclusive descriptions of possible embodiments of the present invention.

A method of forming a hybrid component having an axis of rotation can include forming a first substrate comprising a first interface surface, the first substrate having a first average grain size; forming a second substrate comprising a second interface surface, the second substrate having a second average grain size different from the first average grain size; and inertia welding the first and second substrates together at a junction of the first and second interface surfaces to form a solid-state joint between the first and second substrates.

The method of the preceding paragraph can optionally include, additionally and/or alternatively, any one or more of the following features, configurations and/or additional components:
The first substrate can form a bore region and a first web portion of a hybrid disk, and the second substrate can form a second web portion and a rim region of the hybrid disk such that the joint is located at a web region of the hybrid disk.

The first average grain size can be finer than the second average grain size.

The first average grain size can be between ASTM 11 and ASTM 9, and the second average grain size can be between ASTM 8 and ASTM 6.

The joint can be angled between 5 degrees and 85 degrees relative to the axis of rotation of the hybrid component.

The joint can be angled between 15 degrees and 75 degrees relative to the axis of rotation of the hybrid component.

The joint can be located between 50 percent and 80 percent of a radial distance from the axis of rotation to a radially outer edge of the rim region formed by the second substrate.

The method can further include performing post-welding heat treatments on the hybrid disk and finish machining the hybrid disk.

The first substrate and the second substrate can include forged alloys.

The first substrate and the second substrate can include cast alloys.

Forming the first substrate can include heat treating the first substrate and machining the first interface surface.

Forming the second substrate can include heat treating the second substrate and machining the second interface surface.

A method of forming a hybrid disk having an axis of rotation can include forming a bore substrate having a first average grain size, the bore substrate comprising a first interface surface; forming a rim substrate having a second average grain size different from the first average grain size, the rim substrate comprising a second interface surface; and inertia welding the bore substrate and the rim substrate together at a junction of the first and second interface surfaces to form a solid-state joint between the bore substrate and the rim substrate.

The method of the preceding paragraph can optionally include, additionally and/or alternatively, any one or more of the following features, configurations and/or additional components:
The first average grain size can be between ASTM 11 and ASTM 9, and the second average grain size can be between ASTM 8 and ASTM 6.

The joint can be angled between 5 degrees and 85 degrees relative to the axis of rotation of the hybrid disk.

The joint can be located between 50 percent and 80 percent of a radial distance from the axis of rotation of the hybrid disk to a radially outer edge of the rim substrate.

The method can further include performing post-welding heat treatments on the hybrid disk and finish machining the hybrid disk.

Forming the bore substrate can include heat treating the bore substrate and machining the first interface surface.

Forming the rim substrate can include heat treating the rim substrate and machining the second interface surface.

A hybrid disk can include a bore portion having an average grain size between ASTM 11 and ASTM 9; a rim portion having an average grain size between ASTM 8 and ASTM 6; and a web portion located between the bore portion and the rim portion, the web portion comprising a solid-state joint formed adjacent to a radially outer surface of the bore portion and a radially inner surface of the rim portion where the solid-state joint is angled between 5 degrees and 85 degrees relative to an axis of rotation of the hybrid disk.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a hybrid component (10) having an axis of rotation (18), the method comprising:
forming a first substrate (20) comprising a first interface surface (24), the first substrate (20) having a first average grain size;
forming a second substrate (22) comprising a second interface surface (25), the second substrate (22) having a second average grain size different from the first average grain size; and
inertia welding the first and second substrates (20, 22) together at a junction of the first and second interface surfaces (24, 25) to form a solid-state joint (26) between the first and second substrates (20, 22).

2. The method of claim 1, wherein the first substrate (20) forms a bore region (12) and a first web portion of a hybrid disk (10), and wherein the second substrate (22) forms a second web portion and a rim region (14) of the hybrid disk (10) such that the joint (26) is located at a web region (16) of the hybrid disk (10).

3. The method of claim 2, wherein the joint (26) is located between 50 percent and 80 percent of a radial distance from the axis of rotation (18) to a radially outer edge of the rim region (14) formed by the second substrate (22).

4. The method of claim 2 or 3, further comprising:
performing post-welding heat treatments on the hybrid disk (10); and
finish machining the hybrid disk (10).

5. The method of any preceding claim, wherein the joint (26) is angled between 5 degrees and 85 degrees relative to the axis of rotation (18) of the hybrid component (10),
wherein, optionally, the joint (26) is angled between 15 degrees and 75 degrees relative to the axis of rotation (18) of the hybrid component (10).

6. The method of any preceding claim, wherein the first substrate (20) and the second substrate (22) comprise forged alloys, or cast alloys.

7. The method of any preceding claim, wherein forming the first substrate (20) comprises:
heat treating the first substrate (20); and
machining the first interface surface (24);
wherein, optionally forming the second substrate (22) comprises:
heat treating the second substrate (22); and
machining the second interface surface (25).

8. The method of any preceding claim, wherein the first average grain size is finer than the second average grain size.

9. A method of forming a hybrid disk (10) having an axis of rotation (18), the method comprising:
forming a bore substrate (20) having a first average grain size, the bore substrate (20) comprising a first interface surface (24);
forming a rim substrate (22) having a second average grain size different from the first average grain size, the rim substrate (22) comprising a second interface surface (25); and
inertia welding the bore substrate (20) and the rim substrate (22) together at a junction of the first and second interface surfaces (24, 25) to form a solid-state joint (26) between the bore substrate (20) and the rim substrate (22).

10. The method of claim 8 or 9, wherein the first average grain size is between ASTM 11 and ASTM 9, and wherein the second average grain size is between ASTM 8 and ASTM 6.

11. The method of claim 9 or 10, wherein the joint (26) is angled between 5 degrees and 85 degrees relative to the axis of rotation (18) of the hybrid disk (10).

12. The method of any of claims 9 to 11, wherein the joint (26) is located between 50 percent and 80 percent of a radial distance from the axis of rotation (18) of the hybrid disk (10) to a radially outer edge of the rim substrate (22).

13. The method of any of claims 9 to 12, further comprising:
performing post-welding heat treatments on the hybrid disk (10); and
finish machining the hybrid disk (10).

14. The method of any of claims 9 to 13, wherein forming the bore substrate (20) comprises:
heat treating the bore substrate (20); and
machining the first interface surface (24),
wherein, optionally forming the rim substrate (22) comprises:
heat treating the rim substrate (22); and
machining the second interface surface (25).

15. A hybrid disk (10) comprising:
a bore portion (12) having an average grain size between ASTM 11 and ASTM 9;
a rim portion (14) having an average grain size between ASTM 8 and ASTM 6; and
a web portion (16) located between the bore portion (12) and the rim portion (14), the web portion (16) comprising a solid-state joint (26) formed adjacent to a radially outer surface of the bore portion (12) and a radially inner surface of the rim portion (14), wherein the solid-state joint (26) is angled between 5 degrees and 85 degrees relative to an axis of rotation (18) of the hybrid disk (10).
